# EUROPEAN PATENT SPECIFICATION

(11) **EP 2 935 447 B1**
(45) Date of publication and mention of the grant of the patent: **22.02.2017**
(21) Application number: 13824392.8
(22) Date of filing: 16.12.2013
(51) Int. Cl.: C08L 9/00, B60C 1/00, C08L 97/00, C08H 7/00, C08H 8/00

(54) **TYRE FOR VEHICLE WHEELS**
REIFEN FÜR FAHRZEUGRÄDER
PNEUMATIQUE DESTINÉ À DES ROUES DE VÉHICULE

(30) Priority: 18.12.2012 IT MI20122167; 19.03.2013 US 201361803275 P
(43) Date of publication of application: 28.10.2015
(73) Proprietor: Pirelli Tyre S.p.A., 20126 Milano (IT)
(72) Inventor: HANEL, Thomas, 20126 Milano (IT); CASTELLANI, Luca, 20126 Milano (IT); ORLANDI, Marco, 20126 Milano (IT); FRIGERIO, Paola, 20871 Vimercate (MB) (IT); ZOIA, Luca, 20126 Milano (IT)
(74) Representative: Allaix, Roberto
(86) International application number: PCT/IB2013/060974
(87) International publication number: WO 2014/097108

(56) References cited:
- JP-A- 2010 248 282
- US-A- 2 845 397
- US-A- 5 102 991
- US-A1- 2009 099 281
- US-A1- 2010 204 368
- US-A1- 2012 302 664

## Description

### FIELD OF THE INVENTION

The present invention relates to a tyre for vehicle wheels. More particularly, the present invention relates to a tyre comprising at least one structural element obtained by crosslinking a crosslinkable elastomeric composition comprising at least one dienic elastomeric polymer, at least one carbon black reinforcing filler and at least one functionalized lignin.

### PRIOR ART

Tyres for vehicle wheels comprising lignin are described in patent applications US2010/0204368, WO2009/145784, JP2008/308615, JP2010/242023, JP2010/248282 and in patents US2610954, US2802815, US2906718, US3163614, US3282871, US3296158, US3312643, US3364158, US3817974, US3984362 and US3991022.

US2010/0204368 discloses a tyre comprising the reaction product of sodium lignosulfonate and acetic anhydride.

### SUMMARY OF THE INVENTION

In the rubber industry, in particular in the production of tyres, it is known to use elastomeric compositions in which reinforcing fillers have been incorporated in the elastomeric polymer base to improve the features of the cross-linked products obtained, in particular mechanical properties.

On account of its high reinforcing capacity, carbon black is the most widely used reinforcing filler. Nevertheless, carbon black confers pronounced hysteretic characteristics on the cross-linked products, to be precise an increase in the dissipated heat in dynamic conditions (heat accumulation), which, in a tyre, can cause an increase in the rolling resistance of said tyre and, in particular in the inner structural elements of a tyre, excessively high operating temperatures. The increase in the rolling resistance leads to an increase in fuel consumption of the vehicles, resulting in greater transportation costs and air pollution. Excessively high operating temperatures can involve a deterioration in the mechanical properties of the elastomeric materials included in the semifinished products and possible degradation of the tyre.

Attempts have been made to reduce these negative effects by using smaller quantities of carbon black and/or a carbon black having a smaller surface area. Nevertheless, the implementation of these modifications led to a reduction in the reinforcing action, with a deterioration in the mechanical properties of the final product.

To reduce the heat accumulation of cross-linked products, it is known to use what are known as "white" reinforcing fillers, such as gypsum, talc, kaolin, bentonite, titanium dioxide, silicates of various types and in particular silica, which partially substitutes carbon black.

Nevertheless, the use of silica as reinforcing filler for elastomeric compositions has a number of limitations. One of the most evident disadvantages is the poor processability of the non-cross-linked compositions, which is caused mainly by an excessive viscosity. Therefore, to obtain good dispersion of the silica in the elastomeric polymer base, strong and prolonged thermomechanical kneading of the composition is required. Moreover, the silica particles have a strong tendency to coalesce and to form agglomerates even when they are finely dispersed in the elastomeric polymer base.

Although they are widely used, carbon black reinforcing fillers, combined with white reinforcing fillers or not, are the subject of concern from an environmental point of view, since they constitute a pollutant as well as a carrier of various carcinogenic compounds. Carbon black is also a non-renewable raw material, deriving mainly from partial combustion processes for fossil fuels such as methane gas and other hydrocarbons. The substitution or reduction in the use of carbon black thus represents an objective not just of interest to tyre manufacturers, but also of common interest for communities.

The applicant has now found that it is possible to obtain crosslinkable elastomeric compositions filled with smaller quantities of carbon black, without compromising the mechanical characteristics and with greater hysteresis values, processability, dispersibility and density, by adding at least one functionalized lignin to said compositions, as defined hereinbelow.

The applicant has found that the use of the functionalized lignin has a positive effect both on the weight of the tyre (reducing the density of the elastomeric composition) and on the hysteresis values (reducing the tan delta value), with a consequent positive effect on the rolling characteristics of the tyre, in particular on the rolling resistance thereof. The reduction in the hysteresis values, in particular in the case of inner structural elements of a tyre, also prevents the onset of excessively high operating temperatures, which can risk compromising the integrity of the tyre.

Moreover, the applicant has surprisingly found that the use of the functionalized lignin makes it possible to obtain a very high degree of dispersion, thus improving the homogeneity both of the raw elastomeric composition and of the cross-linked material, by reducing the phenomenon of the inclusion of particle agglomerates that can compromise the integrity of the tyre, giving rise to fracturing phenomena.

The applicant has also unexpectedly found that the use of the functionalized lignin as a partial substitution for carbon black is highly effective in reducing the viscosity of the crosslinkable elastomeric compositions, while at the same time maintaining the reinforcing effect of the carbon black on the elastomeric compositions obtained. As a result, the use of said functionalized lignin does not have an adverse effect on the mechanical properties (both static and dynamic) of the cross-linked elastomeric compositions obtained.

Finally, the applicant has found that the use of the functionalized lignin makes it possible to use a natural and renewable raw material, with further benefits both from an environmental and from an economical point of view.

Therefore, in a first aspect, the present invention relates to a tyre for vehicle wheels comprising at least one structural element comprising a cross-linked elastomeric material obtained by crosslinking a crosslinkable elastomeric composition comprising:
(a) at least one dienic elastomeric polymer;
(b) at least one carbon black reinforcing filler; and
(c) at least one functionalized lignin,
wherein said functionalized lignin is obtained from sulfur-free lignin selected from the group consisting of esterified lignin and etherified and esterified lignin.

According to a preferred embodiment, the tyre for vehicle wheels comprises:
- a carcass structure comprising at least one carcass layer having opposed side edges associated with relative annular reinforcing structures;
- a belt structure applied in a radially outer position with respect to said carcass structure;
- a tread band applied in a radially outer position with respect to said carcass structure; and
- a pair of sidewalls laterally applied onto opposite sides with respect to said carcass structure.

According to a further preferred embodiment, the tyre for vehicle wheels comprises at least one inner structural element made of a cross-linked elastomeric material obtained by crosslinking a crosslinkable elastomeric composition comprising:
(a) at least one dienic elastomeric polymer;
(b) at least one carbon black reinforcing filler; and
(c) at least one functionalized lignin,
wherein said functionalized lignin is obtained from sulfur-free lignin selected from the group consisting of esterified lignin and etherified and esterified lignin.

It is preferable that said inner structural element is selected from the group comprising tread underlayer, carcass structure, belt structure, bead structure, sidewall and underliner.

It is advantageous that said functionalized lignin is obtained from sulfur-free lignin. The term "sulfur-free lignin" or "substantially sulfur-free lignin" refers to a lignin containing a percentage of sulfur equal to or less than 1.2% by weight, preferably less than 1 % by weight, more preferably less than 0.7% by weight.

Commercially available sulfur-free lignins can contain small quantities of sulfur generally of between 0.1 % and 0.9% by weight, often of between 0.3 and 0.8% by weight and above all of between 0.4 and 0.6% by weight.

According to a preferred embodiment, said crosslinkable elastomeric composition can further comprise an additional reinforcing filler (d).

According to a further, preferred embodiment, said crosslinkable elastomeric composition can further comprise a silane coupling agent (e).

According to a further, preferred embodiment, said crosslinkable elastomeric composition can further comprise a vulcanizing system (f).

For the purposes of the present description and of the claims which follow, the term "phr" denotes the parts by weight of a given component of the crosslinkable elastomeric composition per 100 parts by weight of the dienic elastomeric polymer.

For the purposes of the present description and of the claims which follow, the term "approximately" refers in general terms to a range of numbers which an expert in the field deems to be equivalent to the stated value (that is, having the same function or result) and can include numbers which have been rounded up or down to the closest important figure.

According to a further aspect, the present invention relates to a method to reduce the fuel consumption of a vehicle, said method comprising:
to manufacture a tyre for vehicle wheels comprising at least one structural element comprising a cross-linked elastomeric material obtained by crosslinking a crosslinkable elastomeric composition comprising:
   (a) at least one dienic elastomeric polymer;
   (b) at least one carbon black reinforcing filler; and
   (c) at least one functionalized lignin,
   wherein said functionalized lignin is obtained from sulfur-free lignin selected from the group consisting of esterified lignin and etherified and esterified lignin, and
   wherein the hysteresis characteristics and density of said at least one structural element are determined by adjusting within said crosslinkable elastomeric composition the amounts of said carbon black reinforcing filler and said functionalized lignin, and
to equip said vehicle with at least one of said tyre.

According to a preferred embodiment, the dienic elastomeric polymer (a) can be selected from those commonly used in sulfur-crosslinkable elastomeric compositions, which are particularly suitable for producing tyres, i.e. elastomeric polymers or copolymers with an unsaturated chain having a glass transition temperature (Tg) of normally less than 20°C and preferably in the range from 0°C to -110°C. These polymers or copolymers can be of natural origin or can be obtained by solution polymerization, emulsion polymerization or gas-phase polymerization of one or more conjugated diolefins, optionally mixed with at least one comonomer selected from monovinyl arenes and/or polar comonomers.

Conjugated diolefins normally comprise from 4 to 12 and preferably from 4 to 8 carbon atoms and can be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-Butadiene and isoprene are particularly preferred.

Monovinyl arenes, which can be optionally used as comonomers, normally contain from 8 to 20 and preferably from 8 to 12 carbon atoms and can be selected, for example, from: styrene, 1-vinylnaphthalene, 2-vinylnaphthalene, various alkyl, cycloalkyl, aryl, alkylaryl or arylalkyl derivatives of styrene, for example α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers, which can optionally be used, can be selected, for example, from: vinylpyridine, vinylquinoline, acrylic acid and esters of alkylacrylic acid, nitriles, or mixtures thereof, for example methyl acrylate, ethyl acrylate, methyl methacrylate, ethyl methacrylate, acrylonitrile, or mixtures thereof.

Preferably, the dienic elastomeric polymer (a) can be selected, for example, from: cis-1,4-polyisoprene (natural or synthetic, preferably natural rubber), 3,4-polyisoprene, polybutadiene (in particular polybutadiene with a high content of 1,4-cis), optionally halogenated isoprene/isobutylene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

According to a preferred embodiment, said crosslinkable elastomeric composition comprises at least 10% by weight and preferably from 20% by weight to 100% by weight, with respect to the total weight of said at least one dienic elastomeric polymer (a), of at least one copolymer selected from: styrene/1,3-butadiene copolymers, styrene/isoprene/1,3-butadiene copolymers, styrene/1,3-butadiene/acrylonitrile copolymers, or mixtures thereof.

According to a further preferred embodiment, said crosslinkable elastomeric composition comprises:
- from 50% by weight to 90% by weight and preferably from 60% by weight to 80% by weight, with respect to the total weight of said at least one dienic elastomeric polymer (a), of at least one styrene/1,3-butadiene copolymer;
- from 10% by weight to 50% by weight and preferably from 20% by weight to 40% by weight, with respect to the total weight of said at least one dienic elastomeric polymer (a), of at least one polybutadiene with a high content of 1,4-cis, usually greater than 90%, and a low vinylic content, usually lower than 5%.

The abovementioned crosslinkable elastomeric composition can optionally comprise at least one elastomeric polymer of one or more monoolefins with an olefinic comonomer or derivatives thereof (a'). The monoolefins can be selected from: ethylene and α-olefins generally containing from 3 to 12 carbon atoms, for example propylene, 1-butene, 1-pentene, 1-hexene, 1-octene, or mixtures thereof. The following are preferred: copolymers between ethylene and an α-olefin, optionally with a diene; homopolymers of isobutene or copolymers thereof with small amounts of a diene, which are optionally at least partly halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers, or mixtures thereof.

The abovementioned crosslinkable elastomeric composition can optionally comprise at least one dienic elastomeric polymer functionalized by reaction with suitable terminators or coupling agents. In particular, the dienic elastomeric polymers obtained by anionic polymerization in the presence of an organometallic initiator (in particular an organolithium initiator) can be functionalized by reacting the residual organometallic groups derived from the initiator with suitable terminators or coupling agents, for example imines, carbodiimides, alkyltin halides, substituted benzophenones, alkoxysilanes or aryloxysilanes (see for example European Patent EP 451.604 or US Patents 4.742.124 and US 4.550.142).

The elastomeric polymers which can be used according to the present invention can optionally include at least one functional group selected from the carboxylic groups, the carboxylate groups, the anhydride groups, the ester groups, the epoxy groups, which can also be used.

It is preferable that said elastomeric polymers comprise from 0.05% by weight to 10% by weight and preferably from 0.1 % by weight to 5% by weight, with respect to the total weight of the elastomeric polymer, of said at least one functional group selected from the carboxylic groups, the carboxylate groups, the anhydride groups and the ester groups.

In the case of the epoxy groups, said elastomeric polymers preferably comprise less than 10 mol%, preferably from 0.1 mol% to 5 mol%, of epoxy groups with respect to the total number of moles of monomers present in the elastomeric polymer.

Said functional group can be introduced into the elastomeric polymers by means of processes known in the art, for example during the production of the elastomeric polymers, by copolymerization with at least one corresponding functionalized monomer containing at least one ethylenic unsaturation; or by subsequent modification of the elastomeric polymers by grafting said at least one functionalized monomer in the presence of a radical initiator (for example an organic peroxide).

The functionalized monomers which can be used advantageously comprise, for example, monocarboxylic or dicarboxylic acids containing at least one ethylenic unsaturation or derivatives thereof, in particular salts, anhydrides or esters.

Examples of monocarboxylic or dicarboxylic acids containing at least one ethylenic unsaturation or derivatives thereof are the following: maleic acid, fumaric acid, citraconic acid, itaconic acid, acrylic acid, methacrylic acid and salts, anhydrides or esters derived therefrom, or mixtures thereof. Preference is given in particular to maleic anhydride.

As far as the epoxy groups are concerned, the epoxy groups can be introduced during the production of the elastomeric polymers, by copolymerization with at least one epoxy compound containing at least one ethylenic unsaturation. Examples of epoxy compounds containing at least one ethylenic unsaturation are the following: glycidyl acrylate, glycidyl methacrylate, itaconic acid monoglycidyl ester, maleic acid glycidyl ester, vinylglycidyl ether, allylglycidyl ether, or mixtures thereof.

As an alternative, it is possible to introduce the epoxy groups by reacting the elastomeric polymers, in solution, with at least one epoxidizing agent.

This epoxidizing agent is generally a peroxide, a peracid or a derivative thereof, in particular a salt thereof, for example performic acid, perpropionic acid, peracetic acid, m-chloroperbenzoic acid, metal salts of peroxybenzoic acid (for example magnesium bis(2-carboxylate-monoperoxybenzoic acid)hexahydrate) or, as an alternative, hydrogen peroxide in the presence of a carboxylic acid or a derivative thereof, in particular anhydrides (for example acetic acid, formic acid, propionic acid, acetic anhydride), optionally mixed with an acid catalyst (for example sulfuric acid).

Further details concerning processes for epoxidizing elastomeric polymers are described, for example, in the patent US 4.341.672 or by Schultz et al. in "Rubber Chemistry and Technology", vol. 55, pages 809 et seq.

As described above, said elastomeric material also comprises at least one carbon black reinforcing filler (b).

According to a preferred embodiment, the carbon black reinforcing filler (b) that can be used in the present invention can be selected from those with a surface area of at least 20 m²/g (determined as the STSA - statistical thickness surface area according to ISO 18852: 2005).

According to a preferred embodiment, said carbon black reinforcing filler (b) is present in the elastomeric material in an amount of between approximately 0.1 phr and approximately 90 phr, preferably of between approximately 5 phr and approximately 70 phr and more preferably of between approximately 10 phr and approximately 60 phr.

The elastomeric material also comprises at least one functionalized lignin (c).

Lignin is a synthesized biopolymer in the plant world and is second only to cellulose in terms of quantity produced. Biomass formed by cellulose and lignin represents approximately 70% of total biomass.

Lignin is a heavy and complex organic polymer formed mainly by phenolic compounds. In particular, lignin is composed of a cross-linked and three-dimensional polymer structure of phenylpropane units, above all phenylpropyl alcohols (coumaryl, coniferyl and sinapyl). The alcohols are synthesized by the plants by reduction of the corresponding acids by means of the enzyme cinnamyl-CoA: NADPH oxidoreductase.

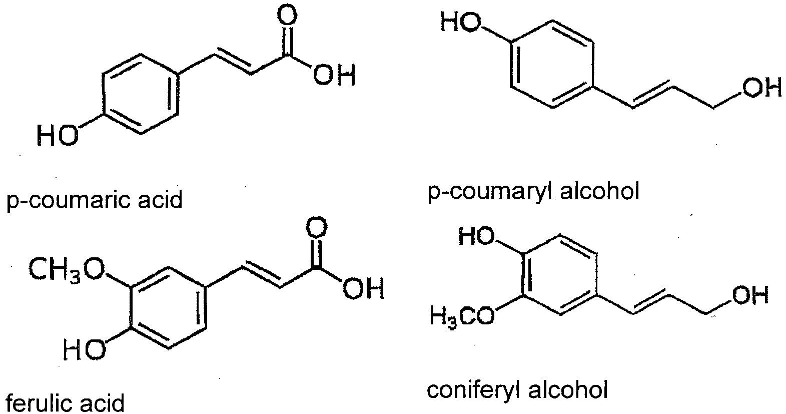

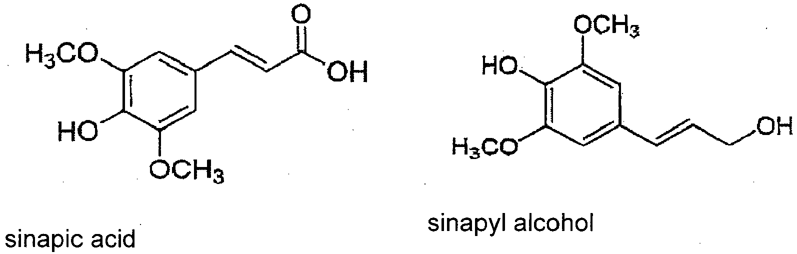

The components of the lignin are present in different quantities depending on the type of plant in which it forms. Coniferyl alcohol is the most abundant precursor of conifer lignin. Woody angiosperm (broad-leaved) lignin is derived above all from sinapyl alcohol. P-coumaryl, coniferyl and sinapyl alcohols are all present in comparable quantities in the composition of herbaceous plant lignin, mainly of the grass family.

The polymer structure of the lignin is very complex and has a three-dimensional form with a crosslink formation comprising ether bonds (CO-C), carbon bonds (C-C) and ester bonds (CO-O-C) among the different phenylpropane units.

The main source of lignin comes from the papermaking industry and from the biocombustible production industry. In both cases, lignin represents a by-product which has to be separated from the main product, which is cellulose or bioethanol. Unpurified raw lignin obtained from the separation process is normally burnt to produce energy. The process used to separate the lignin from the other plant components (cellulose and hemicellulose) produces different types of lignin. In industry, a distinction is made primarily between two types of raw lignin: sulfurated lignin, obtained by treatment processes which comprise a treatment with sulphates or sulphites (sulphate or Kraft process, sulphite process, semichemical process), and sulfur-free lignin, obtained by treatment processes which comprise a treatment with soda (soda pulping), with high-pressure steam (steam explosion) or with organic solvents (solvent pulping). The presence of sulfur in raw sulfurated lignins produces sulfurous anhydride during combustion, and for this reason it is preferable to use lignins which do not contain sulfur in the structure.

The alkaline metal salts of sulphonated lignins have a density of approximately 1.5 g/cm³, whereas sulfur-free lignins have a density of approximately 1.3 g/cm³. The density of raw lignins is therefore much lower than the density of carbon black.

For the purposes of the present invention, preference is given to sulfur-free lignins, even though it is also possible to use salts of sulphonated lignins, these are less advantageous owing to the greater density and the related environmental problems. Sulfur-free lignins obtained by the process described in WO2011/007369 are particularly preferred. Commercially available sulfur-free lignins which can be used for the purposes of the present invention are Protobind® lignins marketed by GreenValue SA, Switzerland and experimental lignins produced by means of the "steam explosion" process.

As can easily be gathered from the chemical structure of the base components of lignin, the latter is particularly rich in hydroxyl groups (-OH), predominantly of the phenolic or alcoholic type and, to a lesser degree, of the carboxylic type, which make the lignin particularly suitable for functionalization by means of esterification and/or etherification reactions.

For the purposes of the present invention, preference is given to lignin functionalized by esterification reactions, possibly preceded by etherification reactions.

In esterification reactions, the hydroxyl groups of the lignin are reacted with a reagent comprising an acyl group (for example an acylic halide such as acetyl chloride or an anhydride such as acetic anhydride) to form the corresponding ester. The esterification reaction involves all the hydroxylic groups, both of the phenolic and alcoholic type. The esterification reaction is generally carried out under heat, preferably under reflux conditions, in a suitable solvent using techniques well known to the man skilled in the art. The reaction can be carried out in the presence of a basic catalyst (for example 1-methylimidazole) or an acidic catalyst (for example hydrochloric acid).

In etherification reactions, the hydroxyl groups of the lignin are reacted with an alkyl or alkylene halide (for example ethyl chloride or allyl chloride) to form the corresponding ether. The etherification reaction preferably involves the hydroxyl groups of the phenolic type. The etherification reaction is generally carried out under heat, preferably under reflux conditions, in a suitable solvent using techniques well known to the man skilled in the art. The reaction can be carried out in the presence of a basic compound (for example sodium carbonate or potassium carbonate).

The functionalized lignin used for the purposes of the present invention is therefore a lignin in which the hydroxyl groups both of the phenolic type and of the alcoholic type are esterified. Alternatively, the functionalized lignin used for the purposes of the present invention is a lignin in which the hydroxyl groups of the phenolic type are etherified and the hydroxyl groups of the alcoholic type are esterified.

Particular preference is given to lignin in which the hydroxyl groups of the phenolic type are etherified and the hydroxyl groups of the alcoholic type are esterified.

It is preferable that the functionalized lignin used for the purposes of the present invention has a percentage of functionalization of equal to or greater than approximately 20%, preferably of equal to or greater than approximately 50%, and more preferably of equal to or greater than approximately 80%.

According to a particularly preferred aspect, the percentage of functionalization of the hydroxyl groups of the phenolic type which are functionalized with an ester and/or ether group is between approximately 90% and 100%.

According to a further particularly preferred aspect, the percentage of functionalization of the hydroxyl groups of the alcoholic type which are functionalized with an ester group is between approximately 90% and 100%.

The expression "percentage of functionalization", used in the present description and in the claims, denotes the percentage ratio between the number of functionalized hydroxyls and the number of total hydroxyls.

According to a preferred embodiment, said functionalized lignin (c) is present in the elastomeric material in an amount of between approximately 1 phr and approximately 80 phr, more preferably of between approximately 5 phr and approximately 40 phr and still more preferably of between approximately 10 phr and approximately 30 phr.

At least one additional reinforcing filler (d) can advantageously be added to the elastomeric material mentioned above. The additional reinforcing filler (d) can be selected from those commonly used for cross-linked products, in particular for tyres, for example silica, alumina, aluminosilicates, calcium carbonate, kaolin or mixtures thereof.

According to a preferred embodiment, the additional reinforcing filler (d) used in the present invention can generally be a fumed silica or, preferably, a precipitated silica, with a BET surface area (measured according to standard ISO 5794/1) of between 50 m²/g and 500 m²/g and preferably between 70 m²/g and 200 m²/g.

According to a preferred embodiment, said additional reinforcing filler (d) is present in the crosslinkable elastomeric composition in an amount of from approximately 10 phr to approximately 120 phr and preferably of from approximately 20 phr to approximately 90 phr.

As indicated above, said crosslinkable elastomeric composition can also comprise at least one silane coupling agent (e) able to interact with the silica and to bond it to the elastomeric polymer during the vulcanization.

Coupling agents which are preferably used are those based on silane, which can be identified, for example, by the structural formula (VI) below:

(R₂)₃Si-CₜH₂ₜ-X (VI)

in which the R₂ groups, which can be identical or different, are selected from: alkyl, alkoxy or aryloxy groups or halogen atoms, on condition that at least one of the R₂ groups is an alkoxy or aryloxy group; t is an integer between 1 and 6 inclusive; X is a group selected from: nitroso, mercapto, amino, epoxide, vinyl, imide, chloro, -(S)ᵤCₜH₂ₜ-Si(R₂)₃ or -S-COR₂, in which u and t are integers from 1 to 6 inclusive and the R₂ groups are defined as indicated above.

Among the coupling agents, those that are particularly preferred are bis(3-triethoxysilylpropyl) tetrasulphide and bis(3-triethoxysilylpropyl) disulphide. Said coupling agents can be used in unmodified form or as a suitable mixture with an inert filler (for example carbon black) so as to facilitate their incorporation into the crosslinkable elastomeric composition.

According to a preferred embodiment, said silane coupling agent is present in the crosslinkable elastomeric composition in an amount of from 0 phr to approximately 10 phr and preferably of from approximately 0.5 phr to approximately 5 phr.

As described above, said elastomeric composition preferably comprises at least one vulcanizing system (f).

The crosslinkable elastomeric composition indicated above can be vulcanized according to the known techniques, in particular with sulfur-based vulcanizing systems commonly used for elastomeric polymers. To this end, after one or more phases of thermomechanical treatment, a sulfur-based vulcanizing agent is incorporated in the composition together with vulcanizing accelerants and activators known to the experts in the field. In the final treatment phase, the temperature is generally maintained below 120°C and preferably below 100°C so as to avoid any undesired pre-crosslinking phenomenon.

The vulcanizing agent most advantageously used is sulfur, or sulfur-containing molecules (sulfur donors).

It is advantageous that said crosslinkable elastomeric composition comprises an amount of vulcanizing agent, expressed in phr of sulfur, of more than 0.5 phr and preferably of equal to or more than 1.5 phr. It is preferable that the amount of vulcanizing agent, expressed in phr of sulfur, is less than or equal to 8 phr and more preferably is less than or equal to 5 phr.

The activators that are particularly effective are zinc compounds and in particular ZnO, ZnCO₃, zinc salts of saturated or unsaturated fatty acids containing from 8 to 18 carbon atoms, for example zinc stearate, which are preferably formed in situ in the elastomeric composition from ZnO and fatty acids, and similarly BiO, PbO, Pb₃O₄, PbO₂, or mixtures thereof.

The accelerants that are commonly used can be selected from: dithiocarbamates, guanidine, thiourea, thiazoles, sulphenamides, thiurams, amines, xanthates, or mixtures thereof.

The total quantity of the vulcanizing system and of the agents of which it is composed could be modified as is known in the art, depending on the final crosslinking density required. Moreover, the presence of functionalized lignin containing alkylene groups, for example allyl groups, introduces further double bonds into the elastomeric material. These interact with the radicals that are produced in vulcanization phases, on the one hand promoting the bond of the lignin to the elastomeric material and on the other hand requiring an increase in the quantity of vulcanizing agents to obtain the same crosslinking density.

Said crosslinkable elastomeric composition can comprise other commonly used additives, selected on the basis of the specific application for which the composition is intended. By way of example, the following can be added to said crosslinkable elastomeric composition: antioxidants, anti-ageing agents, plasticizers, adhesives, antiozone agents (in particular of the p-phenylenediamine type), waxes, modifying resins, fibres (for example Kevlar® paste) or mixtures thereof. In particular, for the purpose of further improving the processability, a plasticizer generally selected from mineral oils, plant oils, synthetic oils or mixtures thereof, for example aromatic oil, naphthenic oil, phthalates, soybean oil, or mixtures thereof, can be added to said crosslinkable elastomeric composition. The amount of plasticizer generally varies between 0 phr and approximately 70 phr and preferably from approximately 5 phr to approximately 30 phr.

The elastomeric composition can be prepared by mixing together the polymeric components with the reinforcing filler and the functionalized lignin and with the other additives optionally present according to the techniques known in the field. The mixing can be performed, for example, by using an open mixer of the "open-mill" type or an internal mixer of the type with tangential rotors (Banbury®) or with copenetrating rotors (Intermix™), or in continuous mixers of the Ko-Kneader™ type or of the type with twin screws or multiple screws.

This description will be presented hereinbelow with reference to the attached drawings, which are given solely as a guide and are therefore non-limiting, in which:
- Figure 1 shows in radial half section a tyre for motor vehicle wheels;
- Figure 2 schematically shows a radial section of a tyre for motorcycle vehicles;
- Figures 3a, 3b and 3c show three photomicrographs, obtained by an optical microscope, of respective sample batches 1, 2 and 4 of Example 2.

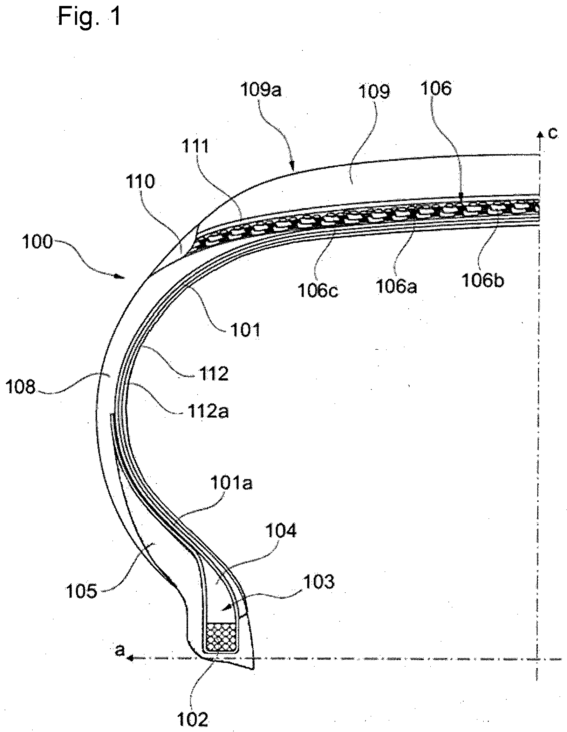

In Figure 1,"a" indicates an axial direction and "r" indicates a radial direction. For simplicity, Figure 1 shows only a portion of the tyre, the remaining portion not shown being identical and arranged symmetrically with respect to the radial direction "r".

The tyre 100 for four-wheeled vehicles comprises at least one carcass structure, comprising at least one carcass layer 101 having respectively opposite ends fastened to respective annular anchoring structures 102, known as bead wires, optionally combined with a bead filling 104. The region of the tyre comprising the bead wire 102 and the filling 104 forms an annular reinforcing structure 103, the "bead", for anchoring the tyre onto a corresponding mounting rim, not being shown.

The carcass structure is usually of the radial type, i.e. the reinforcing elements of the at least one carcass layer 101 are on planes comprising the axis of rotation of the tyre and substantially perpendicular to the equatorial plane of the tyre. Said reinforcing elements generally consist of textile cords, for example made of rayon, nylon or polyester (for example polyethylene naphthalate (PEN)). Each annular reinforcing structure is associated with the carcass structure by back-folding of the opposite side edges of the at least one carcass layer 101 around the annular anchoring structure 102 so as to form the carcass backfolds 101a as shown in Figure 1.

In one embodiment, the coupling between the carcass structure and the annular reinforcing structure can be provided by means of a second carcass layer (not shown in Figure 1) applied in an axially outer position with respect to the first carcass layer.

An antiabrasive strip 105 is placed in an outer position of each annular reinforcing structure 103.

Preferably, the antiabrasive strip 105 is placed so as to wrap the annular reinforcing structure 103 along the axially inner and outer and radially lower zones of the annular reinforcing structure 103 so as to be positioned between the latter and the wheel rim when the tyre 100 is mounted on the rim.

The carcass structure is associated with a belt structure 106 comprising one or more belt layers 106a, 106b radially superimposed one on the other and with respect to the carcass layer, having reinforcing cords typically made of metal. These reinforcing cords can be oriented crosswise with respect to a direction of circumferential development of the tyre 100. The term "circumferential" direction means a direction generally turning in the direction of rotation of the tyre.

At least one zero-degree reinforcing layer 106c, commonly known as a "0° belt", which generally incorporates a plurality of reinforcing cords, typically textile cords, oriented in a substantially circumferential direction, thus forming an angle of a few degrees (for example an angle of between approximately 0° and 6°) with respect to the equatorial plane of the tyre, and coated with an elastomeric material, can be applied in the radially outermost position with respect to the belt layers 106a, 106b.

A tread band 109 made of an elastomeric mixture is applied in a radially outer position with respect to the belt structure 106, as other constituent semiprocessed parts of the tyre 100.

Respective sidewalls 108 made of an elastomeric mixture are also applied in an axially outer position on the side surfaces of the carcass structure, each extending from one of the side edges of the tread 109 up to the related annular reinforcing structure 103.

In the radially outer position, the tread band 109 has a rolling surface 109a intended to come into contact with the ground. Circumferential grooves, which are connected by transverse incisions (not shown in Figure 1) so as to define a plurality of wedges of various shapes and sizes distributed on the rolling surface 109a, are generally made in this surface 109a, which, for simplicity in Figure 1, is shown smooth.

An underlayer 111 is placed between the belt structure 106 and the tread band 109.

A strip consisting of an elastomeric material 110, commonly known as a "mini-sidewall", can optionally be present in the connecting zone between the sidewalls 108 and the tread band 109, this mini-sidewall generally being obtained by co-extrusion with the tread band 109 and allowing an improvement in the mechanical interaction between the tread band 109 and the sidewalls 108. Preferably, the end portion of the sidewall 108 directly covers the side edge of the tread band 109.

In the case of tyres without an inner tube, a layer of rubber 112, generally known as a "liner", which provides the necessary impermeability to the inflating air of the tyre, can be provided in a radially inner position with respect to the carcass layer 101. A layer of elastomeric material, an underliner 112a, can also be provided in a radially outer position with respect to said liner 112.

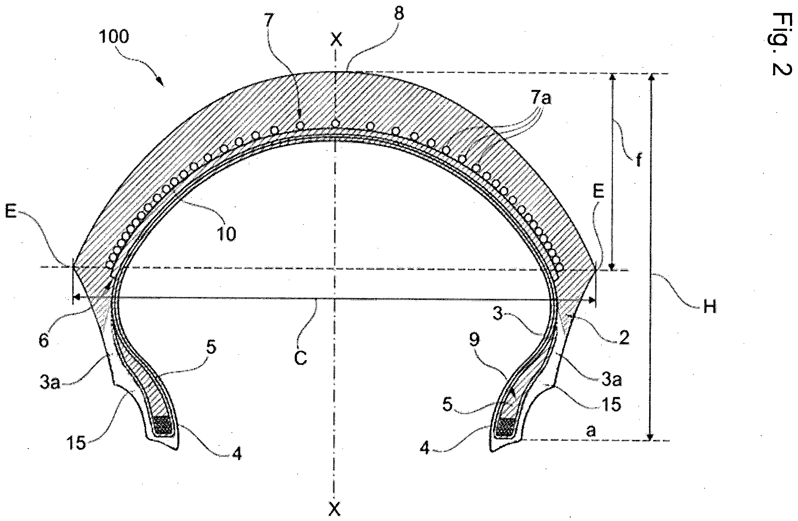

Figure 2 indicates at 100 an entire tyre for wheels of motorcycle vehicles.

An equatorial plane X-X and an axis of rotation Z (not shown in the figure) are defined in the tyre 100. A circumferential direction (indicated in the figures by the arrow f oriented in the direction of rotation of the tyre) and an axial direction perpendicular to the equatorial plane X-X are also defined.

The tyre 100 comprises a carcass structure 2 including at least one carcass ply 3, made of an elastomeric material and comprising a plurality of reinforcing elements arranged parallel to each other.

The carcass ply 3 is fastened, via its opposed circumferential edges, to at least one annular reinforcing structure 9.

In particular, the opposed side edges 3a of the carcass ply 3 are backfolded around annular anchoring structures 4, known as bead wires.

A tapered elastomeric filling 5 which occupies the space defined between the carcass ply 3 and the corresponding backfolded side edge 3a of the carcass ply 3 is applied to the axially outer perimeter of the bead wires 4.

The zone of the tyre comprising the bead wire 4 and the filling 5 forms an annular reinforcing structure 9, the "bead", intended for anchoring the tyre to a corresponding mounting rim, not shown.

The antiabrasive strip 15 is placed in an outer position with respect to each annular reinforcing structure 9.

The reinforcing elements included in the carcass ply 3 preferably comprise textile cords, selected from those usually employed in the manufacture of tyre carcasses, for example made of nylon, rayon, PET, PEN, with elemental yarns having a diameter of between 0.35 mm and 1.5 mm.

In one embodiment, not shown, the carcass structure has its associated opposed side edges without back-folding to particular annular reinforcing structures provided with two annular inserts. A filling made of elastomeric material can be arranged in an axially outer position with respect to the first annular insert. The second annular insert is, however, arranged in an axially outer position with respect to the end of the carcass ply. Finally, a further filling which completes the production of the annular reinforcing structure can be provided in an axially outer position with respect to said second annular insert, and not necessarily in contact therewith.

Typically, a belt structure 6 is applied circumferentially on the carcass structure 2, in a radially outer position, on which belt structure is circumferentially superimposed a tread band 8, on which, following a pressing operation performed concomitantly with the vulcanization of the tyre, are typically made longitudinal and/or transverse cavities, arranged so as to define a desired tread pattern.

The tyre 100 can comprise a pair of sidewalls applied laterally on opposite sides to said carcass structure 2.

Preferably, the tyre 100 has a cross section distinguished by a high transverse curvature.

In particular, the tyre 100 has a cross-sectional height H measured, on the equatorial plane, between the crown of the tread band and the keying diameter, identified by the reference line a passing through the beads of the tyre.

The tyre 100 also has a width C defined by the distance between the laterally opposed ends E of its tread and a curvature defined by the particular value of the ratio between the distance f of the crown of the tread from the line passing via the ends E of its tread, measured on the equatorial plane of the tyre, and said width C. The ends E of the tread can be formed with a corner.

In the present description and in the claims that follow, the term "tyres with high curvature" means tyres which have a curvature ratio f/C not less than 0.2, preferably f/C ≥ 0.25, for example 0.28. Preferably, this curvature ratio f/C is not higher than 0.8, preferably f/C ≤ 0.5.

Preferably, the tyres have particularly low sidewalls. In other words, the term "tyres with low or reduced sidewalls" means tyres in which the sidewall-to-height ratio (H-f)/H is less than 0.7, more preferably less than 0.65, for example 0.6.

In a preferred embodiment, the motorcycle vehicle tyre is intended to be mounted on the rear wheel having cord dimensions substantially between 100 and 260 mm.

In a preferred embodiment, the tyre is intended to be mounted on the front wheel of a motorcycle vehicle having cord dimensions substantially between 80 and 140 mm.

Preferably, the distance (f) between the radially outer point of the tread and the line passing through the laterally opposite ends of the tread of the front tyre can be substantially between 45 and 65 mm. Preferably, the transverse curvature/cord ratio (f/C) can be substantially between 0.35 and 0.70 and even more preferably between 0.35 and 0.60. Preferably, the (total height)/cord ratio (H/C) is substantially between 0.6 and 0.9.

In the case of tubeless tyres, the carcass structure 2 is typically coated on its inner walls with a sealing layer, or "liner", consisting essentially of a layer of airtight elastomeric material, which is capable of ensuring hermetic sealing of the tyre once it is inflated.

Preferably, the belt structure 6 consists of a layer 7 which has a plurality of circumferential windings 7a arranged axially side by side, formed by a rubber cord or by a strip comprising a number of rubber cords (preferably from two to five), wound in a spiral with a substantially zero angle (typically between 0° and 5°) with respect to the equatorial plane X-X of the tyre.

Preferably, the belt structure stretches substantially over the entire crown portion of the tyre.

In a preferred embodiment, the belt structure 6 can consist of at least two radially superimposed layers, each consisting of an elastomeric material reinforced with cords arranged parallel to each other. The layers are arranged such that the cords of the first belt layer are oriented obliquely with respect to the equatorial plane of the tyre, while the cords of the second layer are also oriented obliquely, but are symmetrically crossed with respect to the cords of the first layer (which is known as the "crossed belt").

In both cases, generally, the cords of the belt structure are textile or metal cords.

Preferably, the tyre 100 can comprise a layer of elastomeric material 10 placed between said carcass structure 2 and said belt structure 6.

The manufacture of the tyres 100 as described above can be performed by assembling respective semifinished products on a moulding drum, not shown, by means of at least one assembly device.

At least some of the components intended to form the carcass structure of the tyre can be constructed and/or assembled on the moulding drum. More particularly, the moulding drum is suitable for receiving first the optional liner, and then the carcass structure and the antiabrasive strip. Next, devices not shown fasten one of the annular anchoring structures coaxially around each of the ends, position an outer sleeve comprising the belt structure and the tread band in a position coaxially centred around the cylindrical carcass sleeve and form the carcass sleeve according to a toroidal configuration by means of radial expansion of the carcass structure, so as to bring about its application against a radially inner surface of the outer sleeve.

Following the manufacture of the raw tyre, a pressing and vulcanization treatment is performed in order to give structural stabilization of the tyre by means of crosslinking of the elastomeric mixtures and also to print on the tread band a desired tread pattern and to print optional distinctive graphics on the sidewalls.

The present invention will be further illustrated hereinbelow by means of a number of preparation examples, which are given purely as a guide and with no limitation of this invention.

### EXAMPLE 1

### Preparation of functionalized lignins

The starting biomass is formed by wheat straw (WS) or common giant cane (arundo donax, AD). The biomass is treated in a biomass treatment plant by a steam explosion process to produce bioethanol. Raw lignin, mixed with hemicellulose and other inorganic substances, but substantially free of sulfur or sulfurated compounds, represents a waste product of the process.

### Example 1.A - Purified Lignin

Experimental raw lignin, originating from the aforementioned pilot plant, was subjected to a purification process by treatment with an NaOH 0.1 M solution at a temperature of approximately 50°C, with stirring for approximately one hour until complete solubilization of the lignin. The solution is then filtered to separate the insoluble portion, and the filtrate is acidified with concentrated hydrochloric acid to pH 2 to cause precipitation of the lignin, which is filtered, washed and desiccated in air. Depending on the starting material, what is obtained is therefore sulfur-free WS or AD lignin, in both cases with a purity of greater than 90% (the remainder being formed by water, polysaccharide residues and ashes). The residue, formed by ashes and predominantly polysaccharides, can be passed for combustion for energy recovery.

Lignins 1 and 4 in Table A hereinbelow are therefore obtained by this method.

### Example 1.B - Acetylated lignin

Purified AD lignin from Example 1.A was dissolved in acetic anhydride and subjected to an acetylation reaction with reflux heating to 120°C for one hour in the presence of 1-methylimidazole as catalyst. The reaction was ended by adding water and stirring to decompose the excess acetic anhydride. The reaction mixture was cooled and then filtered and washed with distilled water to eliminate the acetic acid and catalyst residues. The residue formed by acetylated AD lignin with a purity of greater than 90% was desiccated in air.

Lignin 5 in Table A hereinbelow is therefore obtained by this method.

### Example 1.C - Allylated lignin

Purified WS lignin from Example 1.A was dissolved in acetone with allyl bromide and anhydrous potassium carbonate and subjected to an allylation reaction with reflux heating for eight hours. At the end of the reaction, the mixture was left to cool, with partial evaporation of the acetone. Then, the reaction mixture was added very slowly, almost in a dropwise manner, to an acidic aqueous solution (concentrated hydrochloric acid, pH 1.0) with stirring. The mixture thereby obtained was left to rest overnight to allow complete precipitation of the allylated lignin, and was then filtered and washed with distilled water to eliminate the allyl bromide residues. The residue formed by allylated WS lignin with a purity of greater than 90% was desiccated in air.

Lignin 2 in Table A hereinbelow is therefore obtained by this method.

### Example 1.D -Acetylated allylated lignin

Purified and allylated WS lignin from Example 1.C was dissolved in acetic anhydride and subjected to an acetylation reaction with reflux heating to 120°C for one hour in the presence of 1-methylimidazole as catalyst. The reaction was ended by adding water and stirring to decompose the excess acetic anhydride. The reaction mixture was cooled and then filtered and washed with distilled water to eliminate the acetic acid and catalyst residues. The residue formed by acetylated allylated lignin with a purity of greater than 90% was desiccated in air.

Lignin 3 in Table A hereinbelow is therefore obtained by this method.

### Example 1.E - Acetylated allylated sulphonated lignin

The procedure of Examples 1.C and 1.D was repeated using, as starting material, the sodium salt of a commercially available sulphonated lignin, Vanisperse™ CB, which is produced and marketed by Borregaard. Lignin 6 in Table A hereinbelow is therefore obtained by this method.

Table A hereinbelow summarizes the characteristics of the lignins obtained by the procedures described above.

**TABLE A**

| Lignin | Type | Density (g/cm³) |
|---|---|---|
| 1 | Purified WS | 1.3 |
| 2 | Purified and allylated WS | 1.296 |
| 3 | Purified, allylated and acetylated WS | 1.296 |
| 4 | Purified AD | 1.3 |
| 5 | Purified and acetylated AD | 1.296 |
| 6 | Sulphonated, allylated and acetylated | 1.476 |

### EXAMPLE 2

The elastomeric materials reported in Table 1 were prepared in the following manner (the amounts of the various components are indicated in phr).

All the components, with the exception of the sulfur and the accelerant (TBBS), were mixed together in an internal mixer (Haake 200 cc model) for approximately 5 minutes (first phase). As soon as the temperature reached 135 ± 5°C, the elastomeric composition was discharged into an open roller mixer. The sulfur and the accelerant (TBBS) were added and mixing was performed (second phase).

**TABLE 1**

| Sample | 1 (R) | 2 (C) | 3 (C) | 4 (I) | 5 (C) | 6 (I) | 7 (I) |
|---|---|---|---|---|---|---|---|
| First phase | | | | | | | |
| SBR1500 | 50 | 50 | 50 | 50 | 50 | 50 | 50 |
| STR20 | 50 | 50 | 50 | 50 | 50 | 50 | 50 |
| CB | 65 | 50 | 50 | 50 | 50 | 50 | 50 |
| Lignin 1 | - | 15 | - | - | - | - | - |
| Lignin 2 | - | - | 15 | - | - | - | - |
| Lignin 3 | - | - | - | 15 | - | - | - |
| Lignin 4 | - | - | - | - | 15 | - | - |
| Lignin 5 | - | - | - | - | - | 15 | - |
| Lignin 6 | - | - | - | - | - | - | 15 |
| Stearic acid | 2 | 2 | 2 | 2 | 2 | 2 | 2 |
| Oil | 10 | 10 | 10 | 10 | 10 | 10 | 10 |
| 6PPD | 2 | 2 | 2 | 2 | 2 | 2 | 2 |
| ZnO | 3 | 3 | 3 | 3 | 3 | 3 | 3 |

| Second phase | | | | | | | |
|---|---|---|---|---|---|---|---|
| TBBS | 0.8 | 0.8 | 0.8 | 0.8 | 0.8 | 0.8 | 0.8 |
| Vulcanizing | 1.5 | 1.5 | 1.5 | 1.5 | 1.5 | 1.5 | 1.5 |
| agent | | | | | | | |

| | | | | | | | |
|---|---|---|---|---|---|---|---|
| (R) = Reference (C) = Comparative (I) = Invention | | | | | | | |

| | |
|---|---|
| SBR1500 | styrene/1,3-butadiene copolymer, obtained by emulsion polymerization, containing 23% by weight styrene; |
| STR20 | natural rubber, SRI Trang Agroindustry; |
| CB | Carbon black, N375, Cabot; |
| Stearic acid | Sogis; |
| Oil | MES (Mild Extraction Solvate), ENI SPA; |
| ZnO | Zinc oxide, Zincol Ossidi; |
| 6PPD | N-(1,3-dimethylbutyl)-N'-phenyl-p-phenylenediamine; |
| TBBS | N-tert-butyl-2-benzothiazyl sulphenamide, Vulkacit® NZ/EGC, Lanxess; |

Vulcanizing agent Sulfur, Redball Superfine, International Sulphur Inc.

The Mooney viscosity ML (1+4) at 100°C was measured, according to standard ISO 289-1:2005, on the non-cross-linked materials, obtained as described above.

The density was measured according to standard UNI ISO 2781:2011 using water as reference liquid.

The static mechanical properties (CA1 load at 100% elongation, CA3 load at 300% elongation, CR breaking load) according to standard UNI 6065:2001 were measured at various elongations (100%, 300%, breaking) on samples of the elastomeric materials mentioned above, vulcanized at 170°C for 10 minutes.

The IRHD hardness was measured at 23°C and at 100°C according to standard ISO 48:2007 on samples of the aforementioned elastomeric materials, vulcanized at 170°C for 10 minutes.

The dynamic mechanical properties E' and tan delta were measured using an Instron model 1341 dynamic device in traction-compression mode according to the following methods. A test sample of cross-linked material (170°C for 10 minutes) having a cylindrical shape (length = 25 mm; diameter = 14 mm), compression-loaded beforehand up to a longitudinal deformation of 25% with respect to the initial length and maintained at a preset temperature (23°C or 70°C) throughout the test, was subjected to a dynamic sinusoidal stress with an amplitude of ± 3.5% with respect to the pre-loaded length, with a frequency of 100 Hz. The dynamic mechanical properties are expressed in terms of the dynamic elastic modulus (E') and tan delta (loss factor) values. The tan delta value was calculated as the ratio between the viscous dynamic modulus (E") and the elastic dynamic modulus (E'). The thermoplastic behaviour was evaluated as the difference ΔE' between the elastic dynamic modulus values measured at two reference temperatures selected on the basis of the type of elastomeric composition and on its application in the tyre.

The dispersion was measured with a disperGRADER® 1000 analyser apparatus from Optigrade according to standard ISO/DIS 11345 on the basis of the detection of diffused light of the non-dispersed filler agglomerates present on the surface of a freshly cut sample made of vulcanized material. The magnification used is 100x and the minimum value of the dimensions of the non-dispersed aggregates is approximately 3 µm. The data were then processed by software from the manufacturer, and the final result, which represents the degree of global dispersion, is expressed by a numerical value X. The numerical value Y represents an estimation of the dimension of the largest agglomerates present in the sample, in other words an estimation of the tail of the distribution curve of the dimension of the agglomerates present in the sample. Both values X and Y range from 1 (worst) to 10 (best).

The results obtained by the aforementioned determinations are shown in Table 2 hereinbelow.

**TABLE 2**

| Sample | 1 | 2 | 3 | 4 | 5 | 6 | 7 |
|---|---|---|---|---|---|---|---|
| Mooney viscosity | 56.0 | 42.9 | 44.3 | 43.0 | 43.5 | 45 | 52.0 |
| Density | 1.143 | 1.122 | 1.118 | 1.118 | 1.122 | 1.116 | 1.131 |
| IRHD hardness at 23°C | 63.1 | 55.6 | 61.7 | 63.1 | 55.4 | 59.6 | 58.3 |
| IRHD hardness at 100°C | 53.9 | 46.3 | 51.1 | 49.2 | 43.9 | 42.0 | 49.0 |
| STATIC MECHANICAL PROPERTIES | | | | | | | |
| CA1 (MPa) | 1.81 | 1.36 | 1.20 | 1.37 | 1.36 | 1.22 | 1.41 |
| CA3 (MPa) | 9.46 | 5.50 | 4.28 | 6.03 | 5.22 | 4.72 | 6.00 |
| CR (MPa) | 16.96 | 13.40 | 12.30 | 16.20 | 11.11 | 14.61 | 14.80 |
| AR (%) | 516 | 593 | 684 | 670 | 560 | 723 | 591 |
| DYNAMIC MECHANICAL PROPERTIES (100 HZ) | | | | | | | |
| E' at 23°C (MPa) | 9.23 | 8.34 | 7.54 | 8.60 | 8.20 | 8.60 | 7.72 |
| E' at 70°C (MPa) | 6.66 | 5.57 | 4.38 | 5.82 | 4.51 | 5.20 | 5.63 |
| Tan delta at 23°C | 0.281 | 0.248 | 0.251 | 0.257 | 0.248 | 0.252 | 0.257 |
| Tan delta at 70°C | 0.254 | 0.225 | 0.233 | 0.232 | 0.230 | 0.220 | 0.224 |
| DISPERSION ANALYSIS | | | | | | | |
| Mean X | 6.2 | 0.5 | 0.5 | 7.1 | 0.5 | 5.0 | 2.1 |
| Mean Y | 9.7 | 2.6 | 3.8 | 9.8 | 2.4 | 8.7 | 5.4 |

The data shown in Table 2 have shown that elastomeric materials comprising functionalized lignin which can be used in the present invention (Examples 4 and 6) showed a lower density and viscosity with respect to the reference (Example 1), at the same time ensuring static mechanical properties which are better than comparative elastomeric materials comprising purified lignin (Examples 2 and 5) and allylated lignin (Example 3) and comparable to or in certain cases better than the reference (Example 1) comprising only carbon black. The elastomeric material comprising modified sulphonated lignin which can be used in the present invention (Example 7) showed good mechanical characteristics but a higher density and viscosity.

The elastomeric materials comprising the functionalized lignin which can be used in the present invention (Examples 4 and 6) further showed reduced hysteresis values compared to the reference (Example 1), thereby improving the rolling resistance of the tyre and reducing the fuel consumption.

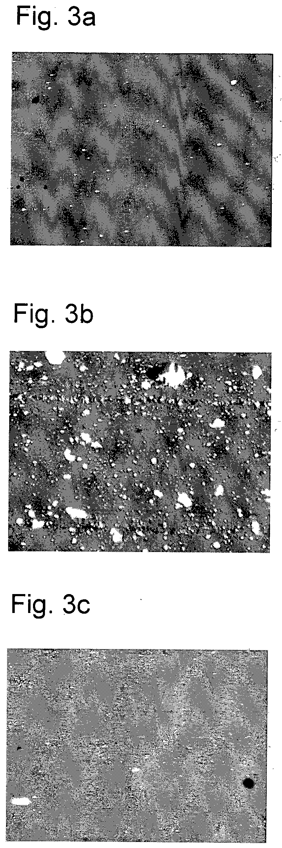

Finally, as shown in Figures 3a-c, the elastomeric materials comprising the functionalized lignin which can be used in the present invention (Examples 4 and 6, the first shown in Figure 3c) showed optimum dispersion values compared to the comparative elastomeric materials (Example 2, shown in Figure 3b) and dispersion values which are comparable to or better than the reference (Example 1, shown in Figure 3a), thereby improving the homogeneity of the elastomeric material and making it possible to obtain a tyre with greater resistance to fatigue and ageing.

The figures were obtained with the same magnification (100x). Figure 3a shows the good dispersion of carbon black in the reference formulation, whereas Figure 3b shows (white) purified lignin aggregates of large dimensions, which indicate poor dispersion properties of the non-functionalized lignin. In Figure 3c, however, aggregates of large dimensions are no longer visible, since the functionalized lignin which can be used in the present invention disperses well.

## Claims

1. Tyre for vehicle wheels comprising at least one structural element comprising a cross-linked elastomeric material obtained by crosslinking a crosslinkable elastomeric composition comprising:
(a) at least one dienic elastomeric polymer;
(b) at least one carbon black reinforcing filler; and
(c) at least one functionalized lignin,
wherein said functionalized lignin is obtained from sulfur-free lignin selected from the group consisting of esterified lignin and etherified and esterified lignin.

2. Tyre for vehicle wheels according to claim 1, wherein said tyre for vehicle wheels comprises:
- a carcass structure comprising at least one carcass layer having opposed side edges associated with relative annular reinforcing structures;
- a belt structure applied in a radially outer position with respect to said carcass structure;
- a tread band applied in a radially outer position with respect to said carcass structure; and
- a pair of sidewalls laterally applied onto opposite sides with respect to said carcass structure.

3. Tyre for vehicle wheels according to claim 1, wherein said structural element is an inner structural element.

4. Tyre for vehicle wheels according to claim 3, wherein said inner structural element is selected from the group comprising tread underlayer, carcass structure, belt structure, bead structure, sidewall and underliner.

5. Tyre for vehicle wheels according to any one of preceding claims, wherein said carbon black reinforcing filler (b) is present in the elastomeric material in an amount ranging from 0.1 phr to 90 phr, preferably from 5 phr to 70 phr.

6. Tyre for vehicle wheels according to any one of preceding claims, wherein said functionalized lignin (c) is present in the elastomeric material in an amount ranging from 1 phr to 80 phr, more preferably from 5 phr to 40 phr, and still more preferably from 10 phr to 30 phr.

7. Tyre for vehicle wheels according to any one of preceding claims, wherein said crosslinkable elastomeric composition comprises an additional reinforcing filler (d).

8. Tyre for vehicle wheels according to claim 7, wherein said additional reinforcing filler (d) is present in the crosslinkable elastomeric composition in an amount ranging from 10 phr to 120 phr, preferably from 20 phr to 90 phr.

9. Tyre for vehicle wheels according to any one of preceding claims, wherein said crosslinkable elastomeric composition comprises a silane coupling agent (e).

10. Tyre for vehicle wheels according to claim 9, wherein said silane coupling agent (e) is present in the crosslinkable elastomeric composition in an amount ranging from 0 phr to 10 phr, preferably from 0.5 phr to 5 phr.

11. Tyre for vehicle wheels according to any one of preceding claims, wherein said crosslinkable elastomeric composition comprises a vulcanizing system (f).

12. Tyre for vehicle wheels according to claim 11, wherein said vulcanizing system (f) comprises a vulcanizing agent comprising sulfur.

13. Tyre for vehicle wheels according to claim 12, wherein said crosslinkable elastomeric composition comprises an amount of vulcanizing agent, expressed as phr of sulfur, higher than 0.5 phr, preferably equal to or higher than 1.5 phr.

14. A method to reduce the fuel consumption of a vehicle, said method comprising:
to manufacture a tyre for vehicle wheels comprising at least one structural element comprising a cross-linked elastomeric material obtained by crosslinking of a crosslinkable elastomeric composition comprising:
(a) at least one dienic elastomeric polymer;
(b) at least one carbon black reinforcing filler; and
(c) at least one functionalized lignin,
wherein said functionalized lignin is obtained from sulfur-free lignin selected from the group consisting of esterified lignin and etherified and esterified lignin, and
wherein the hysteresis characteristics and density of said at least one structural element are determined by adjusting within said crosslinkable elastomeric composition the amounts of said carbon black reinforcing filler and said functionalized lignin, and
to equip said vehicle with at least one of said tyre.

## Patentansprüche

1. Reifen für Fahrzeugräder umfassend zumindest ein Strukturelement, das ein vernetztes Elastomermaterial umfasst, das durch Vernetzen einer vernetzbaren Elastomerzusammensetzung erhalten wird, die umfasst:
(a) zumindest ein elastomeres Dienpolymer;
(b) zumindest einen verstärkenden Kohlenstoffruß-Füllstoff; und
(c) zumindest ein funktionalisiertes Lignin,
wobei das funktionalisierte Lignin aus schwefelfreiem Lignin erhalten wird, das ausgewählt ist aus der Gruppe bestehend aus verestertem Lignin und verethertem und verestertem Lignin.

2. Reifen für Fahrzeugräder nach Anspruch 1, wobei der Reifen für Fahrzeugräder umfasst:
- eine Karkassenstruktur umfassend zumindest eine Karkassenlage mit gegenüberliegenden Seitenrändern, die jeweiligen ringförmigen Verstärkungsstrukturen zugeordnet sind;
- eine Gürtelstruktur, die in Bezug auf die Karkassenstruktur in einer radial äußeren Position angelegt ist;
- einen Laufflächenring, der in Bezug auf die Gürtelstruktur in einer radial äußeren Position angelegt ist; und
- ein Paar Seitenwände, die seitlich auf gegenüberliegenden Seiten in Bezug auf die Karkassenstruktur angebracht sind.

3. Reifen für Fahrzeugräder nach Anspruch 1, wobei das Strukturelement ein inneres Strukturelement ist.

4. Reifen für Fahrzeugräder nach Anspruch 3, wobei das innere Strukturelement ausgewählt ist aus der Gruppe umfassend Laufflächen-Unterschicht, Karkassenstruktur, Gürtelstruktur, Wulststruktur, Seitenwand und Schonschicht.

5. Reifen für Fahrzeugräder nach einem der vorhergehenden Ansprüche, wobei der verstärkende Kohlenstoffruss-Füllstoff (b) in dem Elastomermaterial in einer Menge in dem Bereich von 0,1 phr bis 90 phr, vorzugsweise von 5 phr bis 70 phr vorhanden ist.

6. Reifen für Fahrzeugräder nach einem der vorhergehenden Ansprüche, wobei das funktionalisierte Lignin (c) in dem Elastomermaterial in einer Menge in dem Bereich von 1 phr bis 80 phr, vorzugsweise von 5 phr bis 40 phr, und noch bevorzugter von 10 phr bis 30 phr vorhanden ist.

7. Reifen für Fahrzeugräder nach einem der vorhergehenden Ansprüche, wobei die vernetzbare Elastomerzusammensetzung einen zusätzlichen verstärkenden Füllstoff (d) umfasst.

8. Reifen für Fahrzeugräder nach einem der vorhergehenden Ansprüche, wobei der zusätzliche verstärkende Füllstoff (d) in der vernetzbaren Elastomerzusammensetzung in einer Menge in dem Bereich von 10 phr bis 120 phr, vorzugsweise von 20 phr bis 90 phr vorhanden ist.

9. Reifen für Fahrzeugräder nach einem der vorhergehenden Ansprüche, wobei die vernetzbare Elastomerzusammensetzung einen Silan-Haftvermittler (e) umfasst.

10. Reifen für Fahrzeugräder nach einem der vorhergehenden Ansprüche, wobei der Silan-Haftvermittler (e) in der vernetzbaren Elastomerzusammensetzung in einer Menge in dem Bereich von 0 phr bis 10 phr, vorzugsweise von 0,5 phr bis 5 phr vorhanden ist.

11. Reifen für Fahrzeugräder nach einem der vorhergehenden Ansprüche, wobei die vernetzbare Elastomerzusammensetzung ein Vulkanisiersystem (f) umfasst.

12. Reifen für Fahrzeugräder nach Anspruch 11, wobei das Vulkanisiersystem (f) ein Vulkanisationsmittel umfassend Schwefel umfasst.

13. Reifen für Fahrzeugräder nach Anspruch 12, wobei die vernetzbare Elastomerzusammensetzung eine Menge des Vulkanisationsmittels, ausgedrückt in phr Schwefel, von mehr als 0,5 phr, vorzugsweise gleich oder mehr als 1,5 phr umfasst.

14. Verfahren zur Verringerung des Kraftstoffverbrauchs eines Fahrzeugs, wobei das Verfahren die folgenden Schritte umfasst:
Herstellen eines Reifens für Fahrzeugräder umfassend zumindest ein Strukturelement, das ein vernetztes Elastomermaterial umfasst, das durch Vernetzen einer vernetzbaren Elastomerzusammensetzung erhalten wird, die umfasst:
(a) zumindest ein elastomeres Dienpolymer;
(b) zumindest einen verstärkenden Kohlenstoffruß-Füllstoff; und
(c) zumindest ein funktionalisiertes Lignin,
wobei das funktionalisierte Lignin aus schwefelfreiem Lignin erhalten wird, das ausgewählt ist aus der Gruppe bestehend aus verestertem Lignin und verethertem und verestertem Lignin, und
wobei die Hysterese-Eigenschaften und die Dichte des zumindest einen Strukturelements durch Einstellen der Mengen an verstärkendem Kohlenstoffruss-Füllstoff und funktionalisiertem Lignin innerhalb der vernetzbaren Elastomerzusammensetzung bestimmt werden, und
Ausrüsten des Fahrzeugs mit zumindest einem solchen Reifen.

## Revendications

1. Pneu pour roues de véhicule comprenant au moins un élément de structure comprenant un matériau élastomère réticulé obtenu par réticulation d'une composition élastomère réticulable comprenant :
(a) au moins un polymère élastomère diénique ;
(b) au moins une charge de renforcement de noir de carbone ; et
(c) au moins une lignine fonctionnalisée,
dans lequel ladite lignine fonctionnalisée est obtenue à partir d'une lignine exempte de soufre choisie dans le groupe constitué de lignine estérifiée et de lignine éthérifiée et estérifiée.

2. Pneu pour roues de véhicule selon la revendication 1, dans lequel ledit pneu pour roues de véhicule comprend :
- une structure de carcasse comprenant au moins une couche de carcasse ayant des bords latéraux opposés associés à des structures de renforcement annulaires relatives ;
- une structure de ceinture appliquée dans une position radialement externe par rapport à ladite structure de carcasse ;
- une bande de roulement appliquée dans une position radialement externe par rapport à ladite structure de carcasse ; et
- une paire de flancs appliqués latéralement sur des côtés opposés par rapport à ladite structure de carcasse.

3. Pneu pour roues de véhicule selon la revendication 1, dans lequel ledit élément de structure est un élément de structure interne.

4. Pneu pour roues de véhicule selon la revendication 3, dans lequel ledit élément de structure interne est choisi dans le groupe comprenant une sous-couche de bande de roulement, une structure de carcasse, une structure de ceinture, une structure de talon, un flanc et une doublure interne.

5. Pneu pour roues de véhicule selon l'une quelconque des revendications précédentes, dans lequel ladite charge de renforcement de noir de carbone (b) est présente dans le matériau élastomère en une quantité allant de 0,1 phr à 90 phr, de préférence de 5 phr à 70 phr.

6. Pneu pour roues de véhicule selon l'une quelconque des revendications précédentes, dans lequel ladite lignine fonctionnalisée (c) est présente dans le matériau élastomère en une quantité allant de 1 phr à 80 phr, plus préférablement de 5 phr à 40 phr, et encore plus préférablement de 10 phr à 30 phr.

7. Pneu pour roues de véhicule selon l'une quelconque des revendications précédentes, dans lequel ladite composition élastomère réticulable comprend une charge de renforcement supplémentaire (d).

8. Pneu pour roues de véhicule selon la revendication 7, dans lequel ladite charge de renforcement supplémentaire (d) est présente dans la composition élastomère réticulable en une quantité allant de 10 phr à 120 phr, de préférence de 20 phr à 90 phr.

9. Pneu pour roues de véhicule selon l'une quelconque des revendications précédentes, dans lequel ladite composition élastomère réticulable comprend un agent de couplage au silane (e).

10. Pneu pour roues de véhicule selon la revendication 9, dans lequel ledit agent de couplage au silane (e) est présent dans la composition élastomère réticulable en une quantité allant de 0 phr à 10 phr, de préférence de 0,5 phr à 5 phr.

11. Pneu pour roues de véhicule selon l'une quelconque des revendications précédentes, dans lequel ladite composition élastomère réticulable comprend un système de vulcanisation (f).

12. Pneu pour roues de véhicule selon la revendication 11, dans lequel ledit système de vulcanisation (f) comprend un agent de vulcanisation comprenant du soufre.

13. Pneu pour roues de véhicule selon la revendication 12, dans lequel ladite composition élastomère réticulable comprend une quantité d'agent de vulcanisation, exprimée en phr de soufre, supérieure à 0,5 phr, de préférence supérieure ou égale à 1,5 phr.

14. Procédé pour réduire la consommation de carburant d'un véhicule, ledit procédé comprenant le fait :
de fabriquer un pneu pour roues de véhicule comprenant au moins un élément de structure comprenant un matériau élastomère réticulé obtenu par réticulation d'une composition élastomère réticulable comprenant :
(a) au moins un polymère élastomère diénique ;
(b) au moins une charge de renforcement de noir de carbone ; et
(c) au moins une lignine fonctionnalisée,
dans lequel ladite lignine fonctionnalisée est obtenue à partir d'une lignine exempte de soufre choisie dans le groupe constitué de lignine estérifiée et de lignine éthérifiée et estérifiée, et
dans lequel les caractéristiques d'hystérésis et la densité dudit au moins un élément de structure sont déterminées en réglant dans ladite composition élastomère réticulable les quantités de ladite charge de renforcement de noir de carbone et de ladite lignine fonctionnalisée, et
d'équiper ledit véhicule d'au moins l'un desdits pneus.
